(19) **Europäisches Patentamt / European Patent Office / Office européen des brevets**

(11) **EP 2 840 750 B1**

(12) # EUROPEAN PATENT SPECIFICATION

(45) Date of publication and mention of the grant of the patent:
**27.05.2020 Bulletin 2020/22**

(51) Int Cl.:
*H04L 27/34* (2006.01)  *H04L 25/02* (2006.01)

(21) Application number: **13306164.8**

(22) Date of filing: **22.08.2013**

(54) **NON-DETERMINISTIC PILOT SYMBOL SCHEME**

NICHTDETERMINISTISCHES PILOTENSYMBOLSCHEMA

SCHÉMA DE SYMBOLE PILOTE NON DÉTERMINISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.02.2015 Bulletin 2015/09**

(73) Proprietor: **Alcatel Lucent**
**91620 Nozay (FR)**

(72) Inventor: **Schmalen, Laurent**
**70435 Stuttgart (DE)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
| | |
|---|---|
| EP-A1- 0 987 831 | EP-A1- 1 564 923 |
| WO-A1-99/65171 | WO-A1-2006/119583 |
| WO-A2-2007/066973 | WO-A2-2007/137281 |
| WO-A2-2010/002166 | US-A1- 2007 217 326 |
| US-A1- 2010 002 783 | |

**Description**

Embodiments of the present invention generally relate to communication systems and, more particularly, to communication systems employing pilot signals.

Background

This section introduces aspects that may be helpful in facilitating a better understanding of the inventions. Accordingly, the statements of this section are to be read in this light and are not to be understood as admissions about what is in the prior art or what is not in the prior art.

In telecommunication systems, a pilot signal is commonly understood as a signal transmitted over a communication system for supervisory, control, equalization, continuity, synchronization, or reference purposes. In a transmitter of a communication system, pilot signals or symbols may be regularly inserted into a stream of information carrying signals or symbols. In a receiver of the communication system, the known pilot signals or symbols may be used for various purposes, for example, for estimation of a transmission channel by comparing the known transmitted pilot signal with a received version thereof. Thereby channel estimation may include estimation of attenuation and/or phase of the channel.

Today, there exist mostly two main competing approaches for phase estimation: blind phase estimation and pilot-based phase estimation. In the first approach (blind phase estimation), a phase estimator uses characteristics of a modulated signal (e.g., the knowledge of a modulation scheme) to estimate and correct phase errors. Usually, blind estimators cannot estimate an absolute phase value but only relative errors, such that additional measures are necessary to guarantee successful detection. One possible such measure is differential coding, which however leads in most cases to a differential penalty, resulting in higher Signal-to-Noise-Ratio (SNR) requirements at the receiver unless compensated for by a complex receiver circuitry. Differential encoding admits simple non-coherent differential detection which solves phase ambiguity and requires only frequency synchronization (often more readily available than phase synchronization). Viewed from the coding perspective, performing differential encoding is essentially concatenating an original code with an accumulator, or, a recursive convolutional code.

A popular example of a blind phase estimator is, for example, the Viterbi & Viterbi algorithm, see A. J. Viterbi and A. M. Viterbi, "Nonlinear Estimation of PSK-Modulated Carrier Phase with Application to Burst Digital Transmission", IEEE Trans Inf. Theory, VOL IT-29, No.4. July 1983. Other popular methods include maximum likelihood estimation, as has been described, e.g., in T. Pfau, S. Hoffmann, and R. Noé, "Hardware-Efficient Coherent Digital Receiver Concept With Feedforward Carrier Recovery for M-QAM Constellations," Journal Of Lightwave Technology, Vol. 27, No. 8, April 15, 2009.

The second class of phase estimation methods uses pilots to get an absolute phase estimate. Conventionally, pilots are deterministic, known symbols that are inserted in regular intervals (also denoted pilot spacing, abbreviated by $P_s$) into a data stream to help the receiver to recover the signal (see e.g., Zhang et al., "Pilot-assisted decision-aided maximum-likelihood phase estimation in coherent optical phase-modulated systems with nonlinear phase noise," Photonics Technology Letters, IEEE, vol. 22, no. 6, pp. 380-382, Mar. 2010). As the receiver knows the transmitted pilot sequence, which can be ensured by proper synchronization, it can use the pilot sequence to estimate the phase error which can then be corrected. Often the pure pilot-based phase estimation is too coarse to be employed such that additional measures are necessary. These include an additional blind phase estimation step which may either be placed before (upstream) the coarse pilot-based phase estimator or as a second refining stage after (downstream) the coarse pilot-based estimator.

Naturally, the use of pilots reduces the amount of information or payload rate that can be conveyed over the channel. The overhead induced by adding pilots amounts to $1/(P_s-1)$. This is the main reason why pilots are not well suited for all applications.

A further approach to estimate the phase reference is to use so-called superimposed pilots as described in C. Zhu, F. Pittalà, M. Finkenbusch, P.M. Krummrich, F. Hauske, A. Tran, J. Nossek, T. Anderson, "Overhead-Free Channel Estimation using Implicit Training for Polarization-Multiplexed Coherent Optical Systems," Proc. OFC/NFOEC 2013, Paper OW4B.7, Anaheim, USA. In this case a pilot sequence with low energy is superimposed to the desired signal and at the receiver an averaging filter can use the superimposed sequence to get a phase estimate. The advantage of this solution is that the data rate is not reduced, however, due to the superposition, an inherent decrease in the receiver signal-to-noise ratio has to be tolerated, which is not always desired.

Other approaches for conveying additional useful information using pilots are described in WO 2007/066973 A2, WO 2010/002166 A2, or WO 2006/119583 A1, and EP987831 A1, for example.

However, further improvements with respect to decreasing pilot-related overhead are desirable, thereby increasing a gross data rate of a transmission system for a given data baud rate. However, in order to cope with fast phase variations, the pilot rate $P_s$ shall not be too small in order to get a good estimate of the channel.

Summary

Some simplifications may be made in the following summary, which is intended to highlight and introduce some aspects of the various exemplary embodiments, but such simplifications are not intended to limit the scope of the inventions. Detailed descriptions of preferred exemplary embodiments adequate to allow those of ordinary skill in the art to make and use the inventive concepts will follow in later sections.

Although a deterministic or predetermined pilot symbol, i.e., a pilot symbol that is known a priori, might be well suited for estimating not only a phase offset but also a fading coefficient, it could be oversized for the purpose of purely estimating the channel phase and other solutions, such as various exemplary embodiments explained herein, might be better suited.

It is one finding of embodiments to replace deterministic (predetermined) pilot symbols by non-deterministic (non-predetermined) pilot symbols, i.e., pilot symbol that are not (fully) known a priori. According to some embodiments, the non-deterministic pilot symbol may be partially deterministic and, at the same time, partially randomized pilot symbols. Thus, they allow for sufficiently powerful phase estimation and, at the same time, for decreasing the data rate overhead resulting from the pilot insertion. The randomized part can be used for the transmission of useful data, such as payload or signaling data. In some embodiments this additionally gained data rate can, for example, be used to increase a Forward Error Correction (FEC) overhead and/or to transmit additional low-rate tributaries and/or to transmit network management information and/or channel information to adapt the transmitter.

According to a first aspect, embodiments provide a transmitter for transmitting a signal comprising data symbols and non-deterministic pilot symbols. The transmitter includes a mapper which is operable or configured to map one or more non-deterministic (or non-predetermined) bits to a non-deterministic pilot symbol. Thereby, the non-deterministic pilot symbol has a pilot symbol phase in a predetermined pilot symbol phase range, i.e., a phase range that is known a priori. Further, the transmitter includes a pilot symbol inserter which is operable or configured to insert the pilot symbol into a stream of data symbols.

The transmitter may for example be comprised by an optical communications device, such as an optical transmitter, which may comprise further transmitter circuitry, such as mixers, Digital-to-Analog Converters (DACs), modulators, outer encoders, analog and/or digital signal processors, etc. The signal may further be transmitted over an optical communication channel, such an optical fiber, for example. However, it will be appreciated by the skilled person that embodiments may also be beneficial for other than optical communication systems, such as wireless communication systems, for example.

According to a further aspect, embodiments provide a corresponding method for transmitting a signal comprising data symbols and non-deterministic pilot symbols. The method comprises mapping one or more non-deterministic (or non-predetermined) bits to a non-deterministic pilot symbol. The pilot symbol has a pilot symbol phase in a predetermined pilot symbol phase range of the digital modulation scheme used for the data symbols. Further, the method comprises inserting the pilot symbol into a stream of data symbols.

In embodiments the non-deterministic pilot symbol corresponds to the one or more non-deterministic bits and optionally to one or more deterministic (e.g., predetermined) bits. Hence, a pilot symbol according to some embodiments may be regarded as partially deterministic and partially randomized. The optional one or more deterministic bits correspond to the deterministic portion and may define the predetermined or deterministic pilot symbol phase range, for example. The one or more non-deterministic bits correspond to the randomized portion, leading to non-deterministic pilot symbol amplitude and/or phase in the predetermined pilot symbol phase range.

In one or more embodiments the data symbols and/or the pilot symbols may be modulated according to a digital modulation scheme or format. In digital modulation, an analog carrier signal is modulated by a discrete signal. The changes in the carrier signal are chosen from a finite number of $M$ alternative symbols, i.e., the modulation or symbol alphabet. In embodiments, the digital modulation scheme may be at least a quaternary Quadrature Amplitude Modulation (QAM) scheme, such as 4-QAM, 8-QAM, 16-QAM, 32-QAM, 64-QAM, etc. Alternatively, the digital modulation scheme may be at least a quaternary Phase Shift Keying (PSK) scheme, such as QPSK, 8-PSK, 16-PSK, etc. That is to say, in embodiments with $M \geq 4$.

The $M$-ary data symbol alphabet of the digital modulation scheme defines a data symbol phase range, i.e., a range of possible phases of data symbols carrying payload data. Typically, the data symbol phase range will include discrete data symbol phases reaching from 0° to 360° in some cases. In embodiments the predetermined pilot symbol phase range may be (significantly) smaller than the data symbol phase range. That is to say, in some embodiments the predetermined pilot symbol phase range may cover only a subset of all possible symbol phase values of the digital modulation scheme used for the data symbols. For example, the known pilot symbol phase range may only extend in one or two out of four quadrants of a constellation diagram representing the digital modulation scheme. Thereby a constellation diagram may be understood as a representation of a signal modulated by a digital modulation scheme such as QAM or PSK. It displays the signal as a two-dimensional scatter diagram in the complex plane at symbol sampling instants. In a more abstract sense, it represents the possible symbols that may be selected by a given modulation scheme as points in the complex plane.

In one or more embodiments the known or deterministic pilot symbol phase range may correspond to a range or area having at most a predetermined maximum angular offset from a predetermined axis or line through the constellation diagram of the digital modulation scheme. For example, the predetermined axis may be a bisecting line of one or two quadrants of the constellation diagram. In other embodiments the predetermined axis may be an axis of the complex plane, wherein said the axis defines a real or an imaginary part of a data symbol. The angular offset of a pilot symbol from the predetermined axis may be determined from the point of origin of the complex plane or the point of origin of the constellation diagram. In embodiments, the maximum angular offset, which may be understood as an absolute value, from the predetermined axis or line may be in the range from 0° to 45°, or from 0° to 30°, depending on the modulation scheme or format used for the data symbols. The higher the order of the modulation scheme the smaller the maximum possible angular offset can be. However, if $M$ is very large (e.g., 64-QAM), the SNR will be relatively large and the phase noise in most cases also relatively small, in this case, a large angular offset (that results from the selection of the non-deterministic bits) can be tolerated.

Consequently, in some embodiments a pilot symbol alphabet may be smaller than the data symbol alphabet. That is to say, the amount of possible non- or partially deterministic pilot symbols may be smaller than the amount of possible random data symbols. In one or more embodiments the pilot symbol alphabet may be only a subset of the data symbol alphabet.

Optionally, the transmitter may include at least one Forward Error Correction (FEC) encoder. The FEC encoder may be operable or configured to generate the one or more non-predetermined or non-deterministic bits as redundant bits based on one or more information bits and an FEC encoding rule. This may lead to a potential increase in FEC capabilities by embedding additional FEC overhead or low-rate tributaries into the pilot symbols, thereby potentially increasing the reach of transmission systems, in particular optical transmission systems.

In one or more embodiments the data symbols may correspond to a first information (e.g., payload) data stream. The one or more non-deterministic bits and, hence, the non-or partially deterministic pilot symbol(s) may correspond to a second information (e.g., control signaling) data stream. The second information data stream may have a lower data rate than the first information data stream. In such embodiments, additional information, such as channel measurements and/or network management information, can be transmitted as embedded information into the pilot symbols.

According to yet a further aspect, embodiments provide a receiver for receiving a stream of data and pilot symbols. The receiver comprises a phase estimator which is operable or configured to estimate a phase of a transmission channel based on a comparison of a received symbol corresponding to a pilot symbol position with a hypothetical pilot symbol. The hypothetical pilot symbol corresponds to one or more hypothetical non-deterministic (or non-predetermined) bits and has a pilot symbol phase in a known or predetermined pilot symbol phase range.

Embodiments of the receiver may for example be comprised by an optical communications device, such as an optical receiver, which may comprise further receiver circuitry, such as mixers, Analog-to-Digital Converters (ADCs), demodulators, outer decoders, analog and/or digital signal processors, etc. Consequently, the received signal may have been transmitted via an optical communication channel, such an optical fiber, for example. However, it will be appreciated by the skilled person that embodiments may also be beneficial for other than optical communication systems, such as wireless communication systems, for example.

The receiver is operable to perform a corresponding method for receiving a stream of data and pilot symbols. The method comprises estimating a phase of a transmission channel based on a comparison of a received symbol corresponding to a pilot symbol position with a hypothetical pilot symbol. The hypothetical pilot symbol corresponds to one or more hypothetical non-deterministic (or non-predetermined) transmitted bits and has a pilot symbol phase within a known or predetermined pilot symbol phase range.

In embodiments the predetermined pilot symbol phase range will be (significantly) smaller than the data symbol phase range. That is to say, in some embodiments the predetermined pilot symbol phase range may cover only a subset of all possible symbol phase values of an employed digital modulation scheme used for the data symbols. In embodiments the hypothetical pilot symbol of a plurality of possible pilot symbols may have at most a predetermined maximum angular offset from a predetermined axis through a constellation diagram of the digital modulation scheme. In embodiments this offset may be less than 45°, less than 30°, less than 20°, less than 10°, or 0°. Thereby the predetermined axis may be a bisecting line of a quadrant of the constellation diagram. In some embodiments the predetermined pilot symbol phase range may correspond to less than four (e.g., three or one) possible discrete pilot symbol phase values.

In one or more embodiments the phase estimator may further be operable or configured to perform blind phase estimation prior to or after estimating the phase of the transmission channel based on the comparison of the received symbol with the hypothetical pilot symbol. With such embodiments phase estimation results may be further improved.

In one or more embodiments the receiver may further be operable or configured to extract the transmitted one or more non-predetermined bits corresponding to a pilot symbol based on a result of the comparison. That is to say, the receiver may detect one or more non-predetermined bits from a pilot symbol, respectively. With such embodiments an additional information transport from transmitter to receiver via the pilots may take place.

Some embodiments comprise digital circuitry installed within the transmitters/receivers for performing the respective methods. Such a digital control circuitry, e.g., a digital signal processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the method, when the computer program is executed on a computer or a programmable hardware device.

Embodiments may decrease pilot-related overhead, thereby increasing the gross data rate of the transmission system for a given data baud rate. Some embodiments may also increase forward error correction capabilities by embedding the additional FEC overhead or low-rate tributaries into the pilot symbols, thereby potentially increasing the reach of optical transmission systems. Alternatively, additional information such as channel measurements or network management information can be transmitted as embedded information into the pilot symbols.

Brief description of the Figures

Some embodiments of apparatuses and/or methods will be described in the following by way of example only, and with reference to the accompanying figures, in which

Fig. 1 illustrates a block diagram of an exemplary communication system employing blind phase estimation;

Fig. 2 illustrates a block diagram of an exemplary communication system employing pure pilot-based phase estimation;

Fig. 3 illustrates a block diagram of an exemplary communication system employing pilot-based phase estimation with second stage blind fine phase refinement;

Fig. 4 illustrates a block diagram of an exemplary communication system employing semi-blind pilot-based phase estimation with first stage performing a coarse blind phase estimation and the second stage using pilots to refine the estimate;

Fig. 5 illustrates a block diagram of an exemplary communication system employing pilot-based phase estimation using superimposed pilots;

Fig. 6 illustrates 16-QAM transmission with regular determinstic pilots helping to estimate phase offsets ($P_s = 4$);

Fig. 7 shows a block diagram of a communication system according to an embodiment;

Figs. 8a-e shows 16-QAM transmission with regular non-determinstic pilots according to various exemplary embodiments;

Figs. 9a-j shows 64-QAM transmission with regular non-determinstic pilots according to various exemplary embodiments;

Fig. 10 illustrates a block diagram of an exemplary communication system employing partially determinstic pilot-based phase estimation with second stage blind fine phase refinement according to an embodiment;

Fig. 11 illustrates a block diagram of an exemplary communication system employing semi-blind partially determinstic pilot-based phase estimation with first stage performing a coarse blind phase estimation and the second stage using partially determinstic pilots to refine the estimate;

Fig. 12 illustrates a block diagram of an exemplary communication system employing partially determinstic pilot-based phase estimation with second stage blind fine phase refinement and extracting additional information sequence that has been allocated to the pilots; and

Fig. 13 illustrates a block diagram of an exemplary communication system employing semi-blind partially determinstic pilot-based phase estimation with first stage performing a coarse blind phase estimation and the second stage using partially determinstic pilots to refine the estimate and extracting additional information sequence that has been allocated to the pilots

Description of Embodiments

The invention made is disclosed in the attached set of independent claims. Further embodiments are disclosed in the attached set of dependent claims.

Various example embodiments will now be described more fully with reference to the accompanying drawings in which some example embodiments are illustrated. In the figures, the thicknesses of lines, layers and/or regions may be exaggerated for clarity. Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Before detailing various exemplary embodiments, some conventional communication systems employing blind and/or pilot-based phase estimation will be described first for better understanding of the subject-matter.

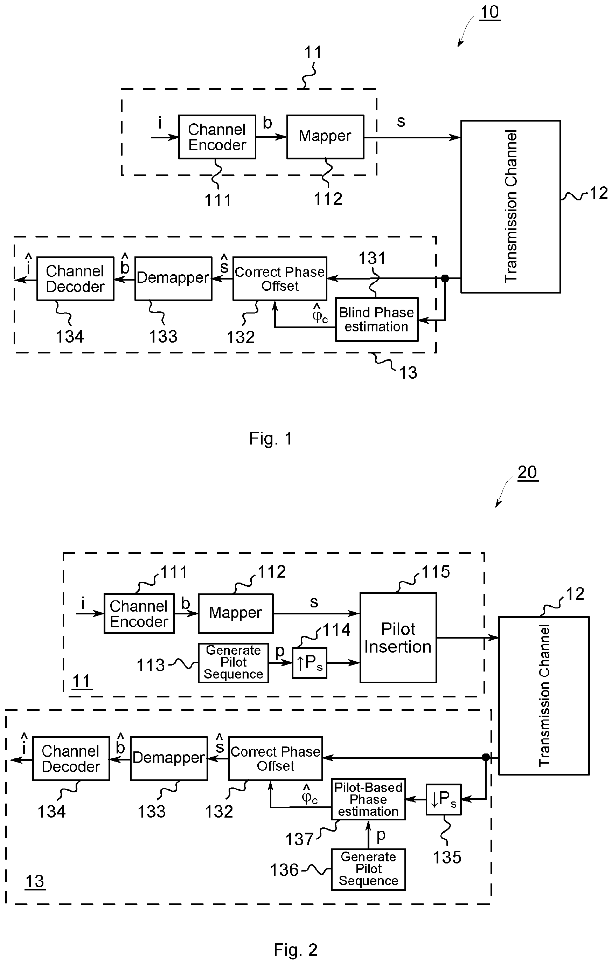

**Fig. 1** illustrates an exemplary conventional communication system 10 employing solely blind phase estimation.

The communication system 10 comprises a transmitter 11, a transmission channel 12, and a receiver 13. The communication system 10 may be an optical communications system. Correspondingly, the transmitter 11 may be an optical transmitter, the channel 12 may be an optical transmission channel, and the receiver 13 may be an optical receiver. Note, however, that although the present specification focuses on optical communication systems, embodiments are not restricted to optical communications and may also be well employed in other communication systems, such as non-optical wireless or wire-line communications, for example.

The exemplary transmitter 11 comprises a channel encoder 111 for performing FEC coding on incoming information or payload bits $i$, resulting in encoded bits $b$ at its output. Downstream to the channel encoder 111 the transmitter 11 further comprises a mapper 112 for mapping groups of encoded bits $b$ to data symbols $s$ according to a digital modulation scheme, for example, 16-QAM or 64-QAM, or the like. The resulting stream of data symbols s is then transmitted to the receiver 13 via the transmission channel 12. The transmission channel 12 can be modeled as having a complex channel gain coefficient $c = a_c \cdot e^{j\varphi_c}$, including amplitude $a_c$ and phase $\varphi_c$. For coherent detection at the receiver 13 the channel phase $\varphi_c$ has to be determined by means of phase estimation techniques.

Fig. 1 also illustrates an exemplary receiver 13 employing so-called blind phase estimation. For that purpose, the received data symbol stream is fed into a blind phase estimator 131, which uses statistical properties of the modulated signal (e.g., the knowledge of the modulation format) to estimate and correct the phase errors. Usually, this blind estimator 131 cannot estimate an absolute phase value but only relative errors, such that additional measures are necessary to guarantee successful signal detection. One possible such measure is differential coding, which however leads in most cases to a differential penalty, resulting in higher signal-to-noise-ratio (SNR) requirements at the receiver unless compensated for by a complex receiver circuitry. For example, at the transmitter differentially encoded data symbols may be derived, using a linear feedback shift register which comprises a delay element. The transfer function of the linear feedback shift register performing the differential encoding rule is given in the z-domain as $H(z) = 1/(1-z^{-1})$. In the BPSK case, a differential encoder can be represented as an accumulator computing $b'_i = b'_{i-1} \oplus b_i$, where "$\oplus$" denotes the modulo-2 addition or the exclusive OR (XOR) operation, respectively.

A popular example of a blind phase estimator 131 is for instance the well-known Viterbi & Viterbi algorithm. Other popular methods include maximum likelihood estimation. The estimated phase values $\hat{\varphi}_c$ output from the blind phase estimator 131 may be fed to a phase offset corrector 132 for de-rotating the received signal symbols phases by the estimated channel phase $\hat{\varphi}_c$. The de-rotated modulation symbols $\hat{s}$ may then be de-mapped by a de-mapper 133 to obtain one or more estimated encoded bits $\hat{b}$, respectively. Those encoded bits $\hat{b}$ may then be fed into a channel decoder 134 for obtaining a guess of the transmitted data bits $\hat{i}$.

**Fig. 2** illustrates a conventional communication system 20 employing pure pilot-aided phase estimation. Again, the communication system 20 comprises a transmitter 11, a communication channel 12, and a receiver 13 . In the following, only the differences with respect to the communication system 10 of Fig. 1 will be detailed.

In Fig. 2 the transmitter 11 additionally comprises a pilot symbol sequence generator 113, a pilot spacing generator 114, and a pilot inserter 115. The pilot symbols $p$ generated by the pilot symbol sequence generator 113 conventionally are deterministic, i.e., predetermined, pilot symbols, which are also fully known to the receiver 13. The pilot spacing generator 114 generates regular intervals, denoted as pilot spacing $P_s$, between adjacent pilots. The pilot inserter 115 is used to insert the regularly spaced pilots into the modulated data stream s to help the receiver 13 recover the original signal.

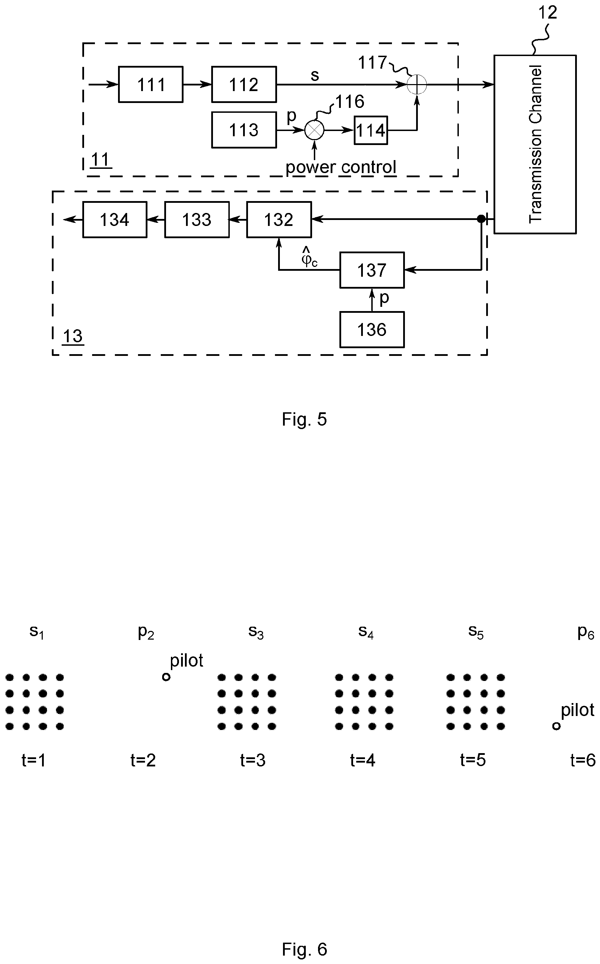

A resulting stream of time-multiplexed data symbols $s$ and deterministic pilot symbols $p$ is schematically shown in **Fig. 6**. In Fig. 6, an exemplary pilot spacing $P_s$ is 4. That is to say, between two subsequent deterministic pilots $p_2$ and $p_6$ at $t = 2$ and $t = 6$, three data symbols $s_3$, $s_4$, and $s_5$ at $t = 3$, $t = 4$, and $t = 5$ are transmitted. In Fig. 6 the data symbols $s$ are exemplarily chosen from a 16-QAM symbol alphabet, while the deterministic pilots $p$ may be chosen from a smaller pilot symbol alphabet. Note that the deterministic pilot sequence is known to the receiver 13, wherefore no information can be conveyed by means of the deterministic pilots.

The corresponding receiver 13 of communication system 20 comprises a pilot symbol sequence generator 136 which corresponds to the pilot symbol sequence generator 113. As mentioned before, the pilot sequence $p$ is completely known to the receiver 13. A pilot position extractor 135 extracts received symbols corresponding to pilot symbol positions (i.e., with pilot spacing $P_s$) from the received signal stream. The extracted received symbols at the pilot symbol positions correspond to pilot symbols impaired by the channel 12 and noise. For example, the effect of noise can be reduced by appropriate filtering. By applying the known (e.g., reciprocal) pilots to the received pilots impaired by the channel 12, the channel phase $\varphi_c$ can be estimated in block 137. With the estimated channel phase $\hat{\varphi}_c$ from phase estimator 137 the receiver 13 can further correct the channel phase offset using block 132, determine estimated encoded bits $\hat{b}$ using the de-mapper 133, and perform channel decoding using decoder 134.

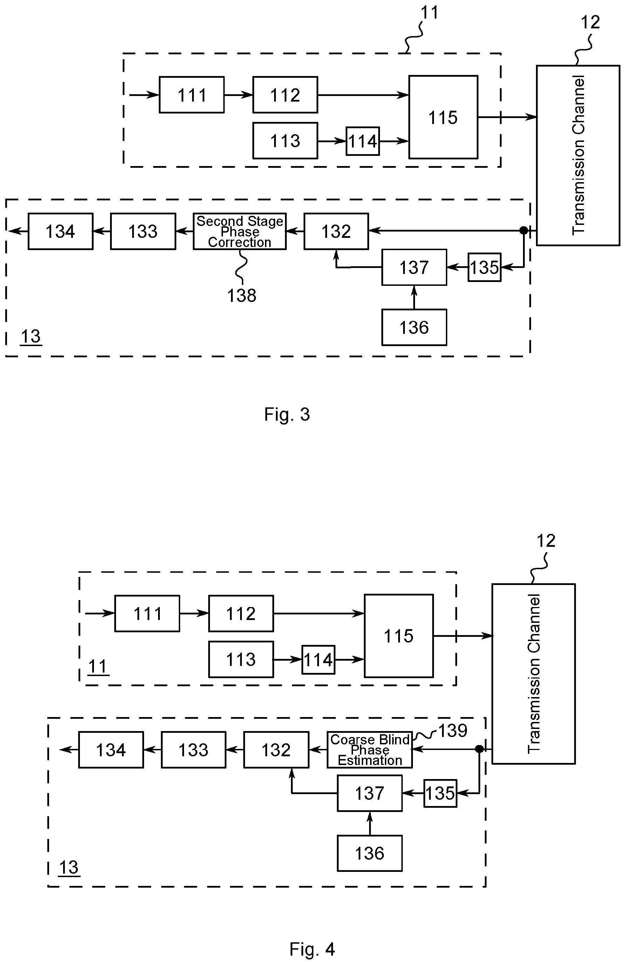

Often the pure pilot-based phase estimation according to Fig. 2 is too coarse to be employed such that additional measures are necessary. These include one or more additional blind pilot-estimation steps which may either be placed in parallel or before (upstream to) the coarse pilot-based phase estimator 137, see **Fig. 4**, or as a second refining stage after (downstream to) the coarse pilot-based estimator 137, see **Fig. 3.**

Naturally, the use of deterministic pilots reduces the amount of information rate that can be conveyed over the channel 12. This is the main reason why pilots are not well suited for all applications. The overhead induced by adding pilots amounts to $1/(P_s-1)$. Furthermore, in order to cope with fast phase variations, the pilot rate $P_s$ shall not be too small in order to get a good estimate. Moreover, although a fully deterministic pilot symbol as in Fig. 6 might be well suited for estimating not only a phase offset but also a fading coefficient, it could be oversized for the purpose of purely estimating the phase and other solutions might be better suited.

A further way to estimate the phase reference is to use so-called superimposed pilots as shown in **Fig. 5.** In this case a pilot sequence $p$ with lower energy than the data symbols $s$ is superimposed to the data symbols $s$. The energy for the pilot sequence $p$ may be adjusted by power control 116. The superposition may be performed via adder 117. At the receiver 13, an averaging filter in the phase estimator 137 can use the known superimposed sequence to get a phase estimate $\hat{\varphi}_c$. The advantage of this solution is that the data rate is not reduced, however, due to the superposition, an inherent decrease in the receiver SNR has to be tolerated, which is not always desired.

In order to overcome the above drawbacks embodiments suggest using non-deterministic or only partially deterministic pilots that allow embedding additional information into the pilot symbols, respectively. Thereby the non- or partially deterministic pilots have either a known pilot symbol phase or a pilot symbol phase in a phase range around a known phase.

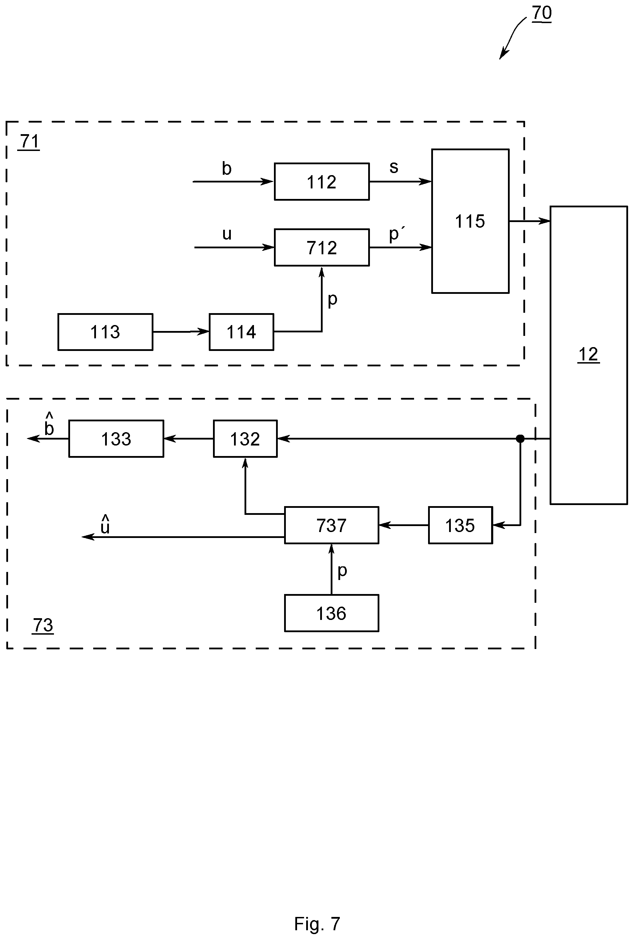

**Fig. 7** shows a block diagram of an exemplary communication system 70 according to an embodiment. The communication system 70 comprises an embodiment of a transmitter 71, a channel 12, and an embodiment of a receiver 73. The communication system 10 may be an optical communications system. Correspondingly, the transmitter 71 may be an optical transmitter and the receiver 73 may be an optical receiver. Note, however, that embodiments are not restricted to optical communications and may also be well employed in other communication systems, such as wireless communications, for example.

The exemplary transmitter 71 comprises a mapper 112 for mapping groups of first information bits $b$ to data symbols $s$ according to a digital modulation scheme, for example, 8-PSK, 16-QAM or 64-QAM, or the like. The transmitter 71 further comprises an optional pilot sequence generator 113, an optional pilot spacing generator 114, an auxiliary mapper 712, and a pilot inserter 115. Pilot bits generated by the optional pilot sequence generator 113 are deterministic, i.e., predetermined, pilot bits, which are also known to the receiver 73. As has been explained before, the pilot spacing generator 114 generates regular intervals, denoted as pilot spacing $P_s$, between adjacent pilot symbols. The auxiliary mapper 712 receives one or more non-deterministic, i.e., non-predetermined, second information bits $u$. Further, the auxiliary mapper 712 may also receive one or more deterministic pilot bits $p$. One or more non-deterministic bits $u$ and the optional one or more deterministic pilot bits $p$ may be mapped to a common non-deterministic pilot symbol $p'$ using the auxiliary mapper 712. That is to say, a non-deterministic pilot symbol may corresponds to the one or more non-predetermined bits $u$ and optionally to one or more predetermined bits $p$. Thereby, a resulting non- or partially deterministic pilot symbol has a pilot symbol phase in a predetermined (i.e., known) pilot symbol phase range which may be substantially smaller than an overall data symbol phase range of the data symbols. That is to say, the possible pilot symbol phase range may only be a small known fraction of the overall data symbol phase range defined by the digital modulation scheme. For example, the pilot symbol phase range may be defined by the optional one or more predetermined bits of a pilot symbol. The pilot inserter 115 may be used to insert the regularly spaced (pilot spacing $P_s$) non-deterministic pilot symbols $p'$ into the modulated stream of data symbols $s$ to help the receiver 73 recover the signal. Note that the data symbols $s$ correspond to a first information data stream of first information bits $b$, while the pilot symbols $p'$ correspond to a second information data stream of second information bits $u$. Thereby the second information data stream may have a lower data rate than the first information data stream. At the receiver 73, the known pilot symbol phase range may be used to perform at least coarse phase estimation.

Hence, embodiments provide a transmitter 71 for transmitting a signal comprising data symbols s and non-deterministic pilot symbols $p'$. The transmitter 73 includes a mapper 712 which is operable or configured to map one or more non-deterministic (or non-predetermined) bits $u$ to a non-deterministic pilot symbol $p'$. Said non-deterministic pilot symbol $p'$ has a pilot symbol phase in a predetermined pilot symbol phase range, which may cover only a small contiguous section of the overall data symbol phase range defined by the digital modulation scheme. For example, the pilot symbol phase range may cover less than 30%, less than 20%, less than 10%, less than 5%, or less than 1% of the overall data symbol phase range. In some embodiments the pilot symbol phase range may be only one discrete phase value. Further, the transmitter 73 includes a pilot symbol inserter 115 which is operable or configured to insert the non- or partially deterministic pilot symbols $p'$ into the stream of data symbols s.

The skilled person will appreciate that the transmitter 71 is operable to perform a corresponding method for transmitting a stream of data and non-deterministic pilot symbols.

The corresponding receiver 73 of communication system 70 comprises an optional pilot sequence generator 136 which corresponds to the optional pilot symbol sequence generator 113. As mentioned before, the optional deterministic part $p$ of the pilot sequence is known to the receiver 13. A pilot position extractor 135 extracts received symbols which correspond to pilot symbol positions from the received signal stream, i.e., the extracted symbols have pilot spacing $P_s$. The extracted received symbols at the pilot symbol positions correspond to non- or partially deterministic pilot symbols impaired by the channel 12 and noise. For example, the effect of noise can be reduced by appropriate band- or low pass filtering. By applying the optional deterministic part $p$ of the pilot sequence and the known pilot symbol phase range to the received pilots impaired by the channel 12, the channel phase $\varphi_c$ can be at least coarsely estimated in the phase estimator block 737, e.g., by de-rotating the phase of an extracted receive symbol by a phase term corresponding to the known pilot symbol phase range (or a mean phase value thereof). Based on a comparison of an extracted receive symbol (corresponding to a pilot symbol position) with a hypothetical pilot symbol which corresponds to one or more hypothetical non-deterministic bits $\hat{u}$, the phase estimator 737 may also determine estimates $\hat{u}$ of the one or more non-deterministic bits $u$ of the pilot symbol. With the estimated channel phase $\hat{\varphi}_c$ from phase estimator 737 the receiver 73 can further correct the channel phase offset using block 132, and determine estimates of the first information bits $b$ using the de-mapper 133.

Hence, embodiments also provide a receiver 73 for receiving a stream of data and pilot symbols. The receiver 73, which may be an optical receiver, comprises a phase estimator 737 which is operable or configured to estimate a phase of a transmission channel 12 based on a comparison of a received symbol corresponding to a pilot symbol position with a hypothetical pilot symbol. The hypothetical pilot symbol corresponds to one or more hypothetical non-deterministic (or non-predetermined) bits $\hat{u}$ and has a pilot symbol phase in a known or predetermined pilot symbol phase range, which may cover only a small contiguous section or fraction of the overall data symbol phase range defined by the digital modulation scheme, hence enabling at least a coarse phase estimation.

The skilled person will appreciate that the receiver 73 is operable to perform a corresponding method for receiving a stream of data and pilot symbols.

We denote by the variable $A > 0$ the number of bits $u$ that are embedded in one non- or partially deterministic pilot symbol $p'$. In this case, the overhead introduced by the pilots $p'$ is reduced to

$$OH' = \frac{1 - \dfrac{A}{M}}{(P_s - 1) + \dfrac{A}{M}} \le \frac{1}{P_s - 1},$$

with $M$ denoting the number of bits per modulation symbol (e.g., $M = 4$ for 16-QAM, $M = 6$ for 64-QAM, etc.).

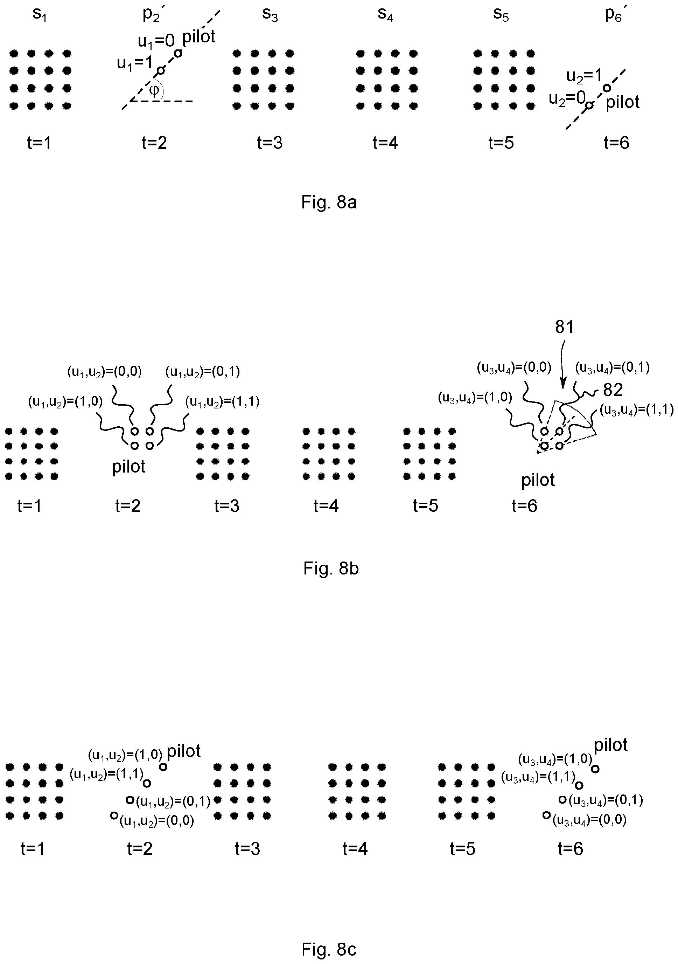

A first embodiment for embedding an additional bit of information $u$ into a pilot $p'$ for a transmission employing 16-QAM modulation is shown in **Fig. 8a.**

In the embodiment of Fig. 8a the pilot spacing $P_s$ is exemplarily chosen to $P_s = 4$. That is to say, between two subsequent non- or partially deterministic pilots $p_2'$ and $p_6'$ at $t = 2$ and $t = 6$, three data symbols $s_3, s_4$, and $s_5$ at $t = 3$, $t = 4$, and $t = 5$ are transmitted. In Fig. 8a the data symbols are exemplarily chosen from a 16-QAM symbol alphabet, while the non- or partially deterministic pilots may be chosen from the same or a smaller pilot symbol alphabet. In particular, the pilot symbol alphabet may be a subset of the data symbol alphabet. Note that only the (optional) deterministic pilot bit or symbol sequence $p$ is known to the receiver 73. The non-deterministic information bit $u$ included in the pilot symbol is however unknown, wherefore information can be conveyed by means of the non- or partially deterministic pilots. Depending on the value of the bit $u_j$ ($j$ denoting the pilot number), either an outer-most point of the 16-QAM constellation or an inner point may be chosen. As both of those points for $u_j = 0$ or $u_j = 1$ lie on the same radial line, i.e., have the same phase $\varphi$ in polar coordinates, the channel phase $\varphi_c$ can still be reliably estimated, for example by rotating the phase of a received symbol by $-\varphi$. In the embodiment of Fig. 8a the predetermined pilot symbol phase range corresponds to said radial line or axis, which is a bisecting line of the first quadrant of the constellation diagram in this embodiment. In other embodiments the radial line can also be an axis of the complex plane, the axis defining a real or an imaginary part of a data or pilot symbol. That is to say, in embodiments the predetermined pilot symbol phase range may comprise only one single known phase value, such as $\varphi = \pi/4$ or $\varphi = -3/4\pi$ in the example of Fig. 8a. The known pilots phase values $\varphi = \pi/4$ or $\varphi = -3/4\pi$ may be selected via the deterministic part $p$ of the pilots, for example. Note that also $-\pi/4$ and $3\pi/4$ may be possible, for example.

Instead of embedding only $A = 1$ bit into a pilot symbol, we can also embed $A = 2$ bits $u$ by using all four symbols of a 16-QAM quadrant as shown in the embodiment of **Fig. 8b.** In this case, we also have to tolerate a loss in phase estimation performance as the possible pilot symbols do not lie on a single radial line but instead on three of them, as shown in the right part of Fig. 8b. In Fig. 8b the predetermined pilot symbol phase range 81 corresponds to a range having a predetermined maximum angular offset from a predetermined axis 82 through a constellation diagram of the employed digital modulation scheme. In the embodiment of Fig. 8b the predetermined axis 82 is a bisecting line of a quadrant (e.g., the first quadrant) of the 16-QAM constellation diagram and the angular offset from said axis 82 is in the range of $\pm 26.56°$, leading to a possible phase cone of 51.13°. Hence, in this example the pilot symbol phase range covers approximately $51.13/360 \cdot 100\% \approx 14$ % of the overall 16-QAM data symbol phase range. Depending on the employed modulation format or scheme, the maximum angular offset may be in the range from 0° to $\pm 45°$. Note, however, that small or even vanishing maximum angular offsets from the line/axis 82 are preferred for better phase estimation results. An example for vanishing angular offset from line 82 has been given in Fig. 8a.

In the example of Fig. 8b the coarse pilot-based phase estimator 737 has a larger residual phase ambiguity that may however be taken into account by a (blind) refinement stage 138, as has been explained with reference to Fig. 3. Another possibility to improve phase estimation is to use a first blind phase estimation stage 139, similar to the setup of Fig. 4, and to use the pilot-based estimator 737 to recover the phase ambiguities, also called phase slips, that are multiples of 90°. Thereby, the estimated channel phase may be erroneous to a degree, such that the correction of the received signal causes a rotation of the QAM or PSK constellation diagram by a whole numbered multiple of the separation angle from the receiver's perspective. Such a rotation of the constellation diagram occurs from the time instant of one data symbol to a next time instant of a next successive data symbol and is called a phase slip. A typical value for a probability of a phase slip is for example $10^{-3}$.

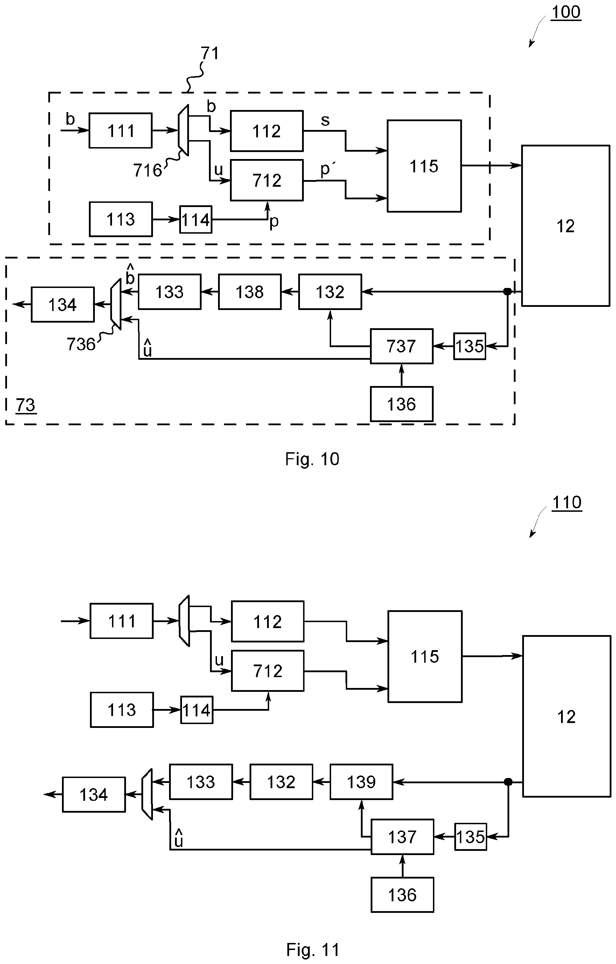

We consider two examples for embedding additional data into the pilot sequence. The first one is to employ a modified Forward Error Correction (FEC) encoder with a higher overhead (and thus possibly better error correction capabilities) that maps the additional overhead to the $A$ bits embedded in the pilot symbols. This situation is shown in **Figures 10 and 11** for both cases introduced above (blind pre-estimation or blind-refinement stage).

An embodiment of a receiver 73 using an additional blind phase estimation refinement stage 138 downstream to coarse phase offset correction 132 is illustrated in the exemplary communication system 100 of Fig. 10. The transmitter 71 of Fig. 10 comprises an FEC encoder 111, for example an convolutional or block encoder, which is operable to generate the one or more non-predetermined bits $u$ as redundant bits based on one or more information bits $b$ and an FEC encoding rule. The information bits $b$ and the redundant bits $u$ from the encoder 111 may be de-multiplexed using a de-multiplexer 716, such that there are two bit streams $b$ and $u$. While the first information bits $b$ may be mapped to data symbols via mapper 112, the second bits $u$ may be mapped to non- or partially deterministic pilot $p'$ symbols via auxiliary mapper 712 as has been explained with reference to Fig. 7. Hence, the data symbols $s$ correspond to a first information data stream and the one or more non-predetermined bits $u$ of the pilot symbol $p'$ correspond to a second information data stream potentially having a lower data rate than the first information data stream. At the receiver 73, the estimates of the first and second bits $\hat{b}$ and $\hat{u}$ may be multiplexed to estimated encoded bits before entering decoder 134.

An embodiment of a receiver 73 using an additional first blind phase estimation stage 139 upstream or parallel to coarse phase offset correction 132 is illustrated in the communication system 110 of Fig. 11.

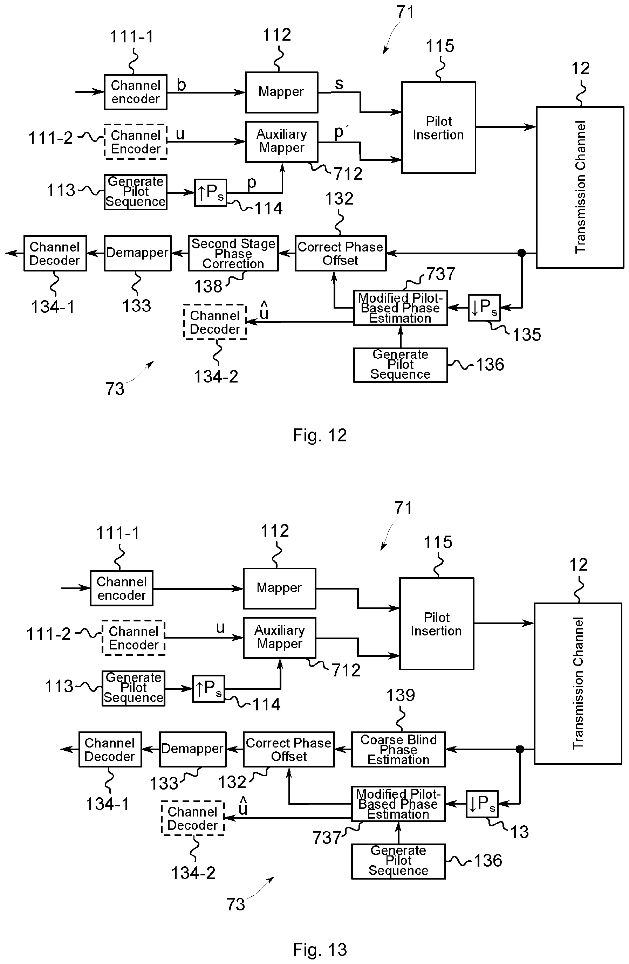

The second of the above mentioned examples is to embed an additional low-rate data stream $u$, e.g., framing information, an additional 1Gbps tributary in the case of an 100Gbit/s baseline operation with $P_s$=100, or even an additional 10Gbps tributary if the modulation format and $P_s$ permit that. Another example is to transmit network management information in the second stream $u$, hence the pilots $p'$, for example unique identifiers of the network equipment, or channel information of a return channel without having to alter the protocols. This situation is shown in **Figures 12 and 13,** again for both cases introduced above. In this last case, we can think of applying embodiments in a backward compatible way to existing schemes such that receivers equipped with the extraction technology can benefit from the pilot-embedded information and legacy receivers still continue to work as expected (but without utilizing the embedded information).

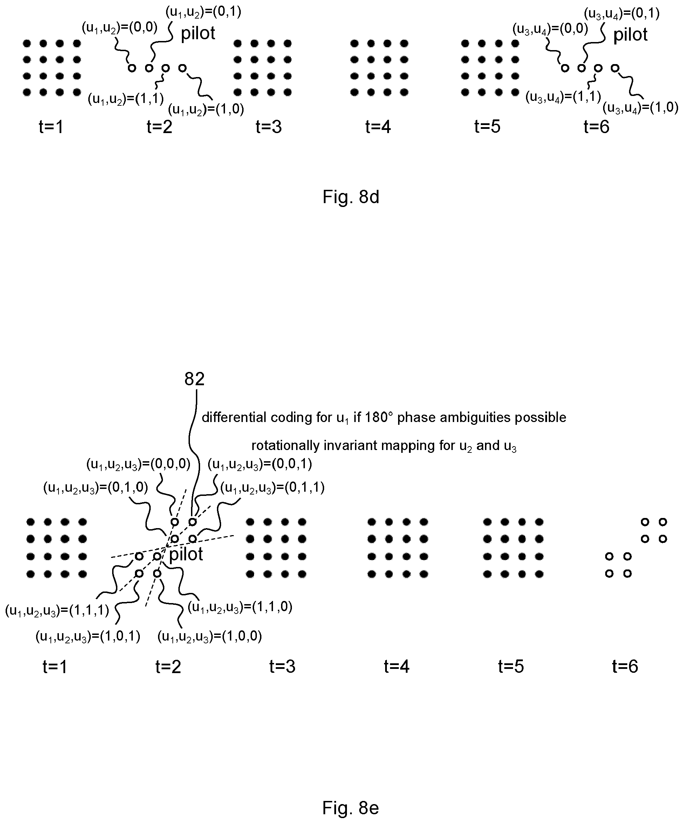

Turning back to **Figures 8c and 8d,** there are shown two alternative examples for embedding $A$=2 additional bits into the non- or partially deterministic pilot symbols. In this case, the pilots all lie in the same radial line but in two different quadrants such that the pilot-based phase estimator 737 may estimate the channel phase tolerating a possible 180° phase ambiguity. Here, the predetermined pilot symbol phase range comprises only two discrete known phase values, which are shifted by 180°. This residual ambiguity can possibly lead to 180° phase slips, which however are easier to cope with than 90° phase ambiguities. The reason for this is that 90° phase ambiguities require the use of non-binary coding (e.g., differential coding or phase offset tolerant forward error correction techniques), while 180° phase ambiguities can easily be taken into account by binary differential coding or by binary codes that can be easily incorporated (see, e.g., Fig. 8a and/or 8b)

Fig. 8e shows an example for embedding $A$=3 bits into the 16-QAM non- or partially deterministic pilot symbols. In this case we have to tolerate a coarse phase estimation error as well due to the fact that now all pilots lie on three radial lines and have an additional 180° phase offset. In this case, the pilots all lie in three radial lines and in two different quadrants such that the pilot-based phase estimator 737 may estimate the channel phase tolerating a possible 180° phase ambiguity. The exemplary mapping of Fig. 8e is 180°-rotationally invariant for two of the $A$=3 bits and only has a phase ambiguity for the first bit that may be taken care of with by means of an additional (binary) differential code (or other measures). In the embodiment of Fig. 8e the predetermined axis 82 is a bisecting line of two quadrants (e.g., the first and the third quadrant) of the 16-QAM constellation diagram and the angular offset from said axis 82, which denotes a mean pilot symbol phase value, is in the range of $\pm26.56°$, leading to a possible double phase cone of 51.13°. Hence, in this example the pilot symbol phase range covers approximately $2\cdot51.13/360\cdot100\% \approx 28\%$ of the overall data symbol phase range.

It should be noted that it is generally also possible to embed a non-integer number of additional data bits into non- or partially deterministic pilot symbols. For instance, one could select three non-deterministic points of a 16 QAM-constellation leading to $A=\log_2(3) \approx 1.58$ bits that can be embedded.

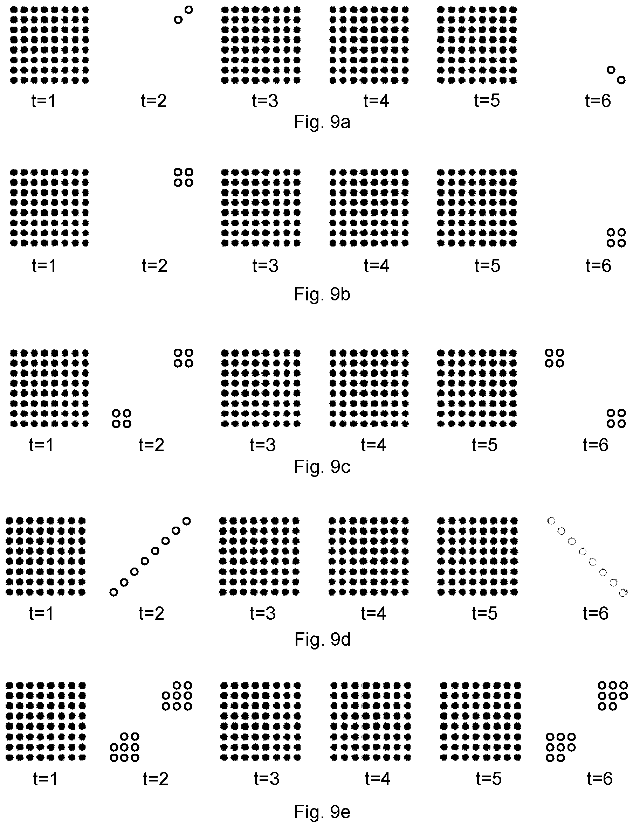

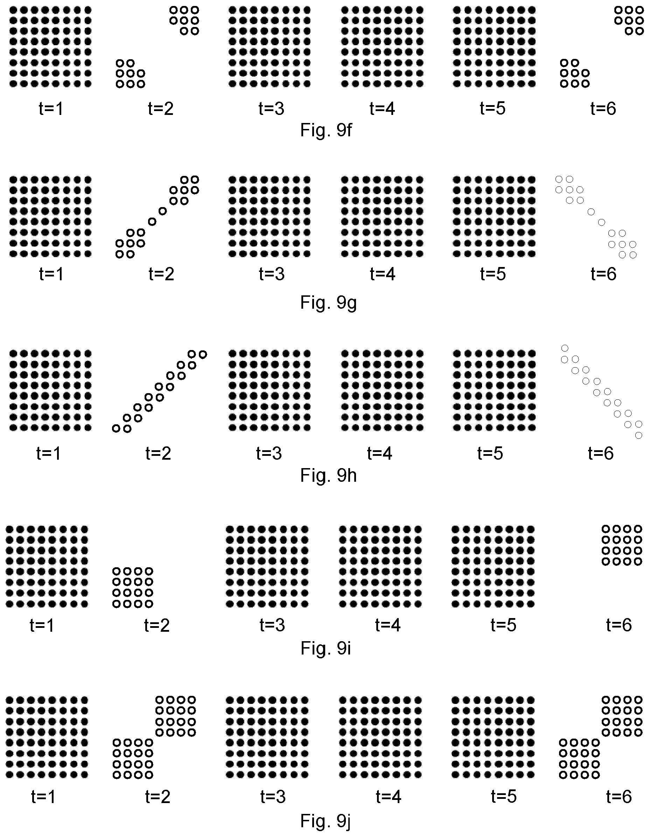

**Figures 9a-j** show various examples for embedding between $A$=1 to $A$=5 additional data bits into non- or partially deterministic pilot symbols of an exemplary 64-QAM transmission scheme, leading to various levels of phase estimation robustness and residual phase ambiguities. The embodiments shown in Figs. 9a-j) are in line with the principles of the present invention. Although we have only shown examples for 16-QAM and 64-QAM modulation formats, the proposed apparatuses and methods can well be applied to any other modulation formats by using the same or similar principles.

Embodiments can be used to increase in forward error correction capabilities by embedding the additional FEC overhead or low-rate tributaries into pilot symbols, thereby potentially increasing the reach of optical transmission systems. Alternatively, additional information such as channel measurements or network management information can be transmitted as embedded information into the pilot symbols. Some of the advantages of the new solution are a decreased pilot-related overhead from $1/(P_S\text{-}1)$ to $(1\text{-}A/M)/(P_S\text{-}1+A/M)$, increasing the gross (and net) data rate of the transmission system for a given symbol baud rate.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A transmitter (71) for transmitting to a receiver a signal comprising data symbols and pilot symbols, the transmitter comprising:

    a mapper (712) operable to map one or more non-deterministic bits ($u$) and one or more deterministic bits ($p$) to a partially non-deterministic partially deterministic pilot symbol (p'), wherein the one or more deterministic bits ($p$) are known to the receiver, wherein the one or more non-deterministic bits ($u$) are unknown to the receiver, wherein the partially non-deterministic partially deterministic pilot symbol (p') and the data symbols are modulated according to a digital modulation scheme, wherein the partially non-deterministic partially deterministic pilot symbol (p') has a pilot symbol phase in a predetermined pilot symbol phase range that is known to the receiver and covers a subset of all possible symbol phase values of the digital modulation scheme used for the data symbols, wherein the partially non-deterministic partially deterministic pilot symbol (p') is modulated using a pilot symbol alphabet that is a subset of a data symbol alphabet used for the data symbols; and
    a pilot symbol inserter (115) operable to insert the partially non-deterministic partially deterministic pilot symbol into a stream of data symbols.

2. The transmitter (71) of claim 1, wherein the predetermined pilot symbol phase range extends in one or two quadrants of a constellation diagram representing a digital modulation scheme used for the data symbols.

3. The transmitter (71) of claim 1, wherein the predetermined pilot symbol phase range corresponds to a range having a predetermined maximum angular offset from a predetermined axis through a constellation diagram of a digital modulation scheme used for the data symbols.

4. The transmitter (71) of claim 3, wherein the predetermined axis is a bisecting line of a quadrant of the constellation diagram.

5. The transmitter (71) of claim 4, wherein the maximum angular offset is in the range from $0°$ to $\pm45°$, in particular in the range from $0°$ to $\pm30°$.

6. The transmitter (71) of claim 1, wherein the transmitter (71) is operable to modulate the data symbols and/or the non-deterministic pilot symbols according to at least a quaternary Quadrature Amplitude Modulation (QAM) or a quaternary Phase Shift Keying (PSK) scheme.

7. The transmitter (71) of claim 1, further comprising a Forward Error Correction (FEC) encoder (111) operable to generate the one or more non-predetermined bits ($u$) as redundant bits based on one or more information bits and an FEC encoding rule.

8. The transmitter (71) of claim 1, wherein the data symbols correspond to a first information data stream and wherein the one or more non-deterministic bits ($u$) of the partially non-deterministic partially deterministic pilot symbol correspond to a second information data stream having a lower data rate than the first information data stream.

9. The transmitter (71) of claim 8, wherein second information data stream comprises control information.

10. A method for transmitting to a receiver a signal comprising data symbols and pilot symbols, the method comprising:

    mapping one or more non-deterministic bits ($u$) and one or more deterministic bits ($p$) to a partially non-deterministic partially deterministic pilot symbol (p'), wherein the one or more deterministic bits (*p*) are known to the receiver, wherein the one or more non-deterministic bits (*u*) are unknown to the receiver, wherein the partially non-deterministic partially deterministic pilot symbol (p') and the data symbols are modulated according to a digital modulation scheme, wherein the partially non-deterministic partially deterministic pilot symbol (p') has a pilot symbol phase in a predetermined pilot symbol phase range that is known to the receiver and covers a subset of all possible symbol phase values of a digital modulation scheme used for the data symbols, wherein the partially non-deterministic partially deterministic pilot symbol (p') is modulated using a pilot symbol alphabet that is a subset of a data symbol alphabet used for the data symbols; and

inserting the partially non-deterministic partially deterministic pilot symbol into a stream of data symbols.

11. A receiver (73) for receiving a stream of data symbols and pilot symbols, the receiver comprising:
a phase estimator (737) operable to estimate a phase of a transmission channel based on a comparison of a received symbol corresponding to a pilot symbol position with a hypothetical partially non-deterministic partially deterministic pilot symbol, the hypothetical partially non-deterministic partially deterministic pilot symbol corresponding to a mapping of one or more hypothetical non-deterministic bits (*u*) unknown to the receiver and one or more deterministic bits known to the receiver, wherein the hypothetical partially non-deterministic partially deterministic pilot symbol (p') and the data symbols are modulated according to a digital modulation scheme, wherein the hypothetical partially non-deterministic partially deterministic pilot symbol (p') has a pilot symbol phase in a predetermined pilot symbol phase range that is known to the receiver and covers a subset of all possible symbol phase values of the digital modulation scheme used for the data symbols, wherein the partially non-deterministic partially deterministic pilot symbol (p') is modulated using a pilot symbol alphabet that is a subset of a data symbol alphabet used for the data symbols.

12. The receiver (73) of claim 11, wherein the phase estimator (737) is further operable to perform an additional blind phase estimation prior to or after estimating the phase of the transmission channel.

13. The receiver (73) of claim 11, wherein the receiver (73) is further operable to detect the one or more non-deterministic bits (*u*) based on a result of the comparison.

14. A method for receiving by a receiver a stream of data symbols and pilot symbols, the method comprising:

estimating a phase of a transmission channel based on a comparison of a received symbol corresponding to a pilot symbol position with a hypothetical partially non-deterministic partially deterministic pilot symbol, the hypothetical partially non-deterministic partially deterministic pilot symbol corresponding to a mapping of one or more hypothetical non-deterministic bits (*u*) unknown to the receiver and one or more deterministic bits known to the receiver, wherein the hypothetical partially non-deterministic partially deterministic pilot symbol (p') and the data symbols are modulated according to a digital modulation scheme, wherein the hypothetical partially non-deterministic partially deterministic pilot symbol (p') has a pilot symbol phase in a predetermined pilot symbol phase range that is known to the receiver and covers a subset of all possible symbol phase values of a digital modulation scheme used for the data symbols, wherein the partially non-deterministic partially deterministic pilot symbol (p') is modulated using a pilot symbol alphabet that is a subset of a data symbol alphabet used for the data symbols; and

inserting the partially non-deterministic partially deterministic pilot symbol into a stream of data symbols.

**Patentansprüche**

1. Sender (71) zum Übertragen eines Signals mit Datensymbolen und Pilotsymbolen an einen Empfänger, wobei der Sender umfasst:

eine Abbildungseinrichtung (712), die dazu betreibbar ist, ein oder mehrere nichtdeterministische Bits (*u*) und ein oder mehrere deterministische Bits (*p*) auf ein teilweise nichtdeterministisches, teilweise deterministisches Pilotsymbol (p') abzubilden, wobei das eine oder die mehreren deterministischen Bits (*p*) dem Empfänger bekannt sind, wobei das eine oder die mehreren nichtdeterministischen Bits (*u*) dem Empfänger unbekannt sind, wobei das teilweise nichtdeterministische, teilweise deterministische Pilotsymbol (p') und die Datensymbole gemäß einem digitalen Modulationsschema moduliert werden, wobei das teilweise nichtdeterministische, teilweise deterministische Pilotsymbol (p') eine Pilotsymbolphase in einem vorbestimmten Pilotsymbolphasenbereich aufweist, der dem Empfänger bekannt ist und eine Teilmenge aller möglichen Symbolphasenwerte des für die Datensymbole verwendeten digitalen Modulationsschemas abdeckt, wobei das teilweise nichtdeterministische, teilweise deterministische Pilotsymbol (p') unter Verwendung eines Pilotsymbolalphabets moduliert wird, das eine Teilmenge eines für die Datensymbole verwendeten Datensymbolalphabets ist; und

eine Pilotsymboleinfügeeinrichtung (115), die dazu betreibbar ist, das teilweise nichtdeterministische, teilweise deterministische Pilotsymbol in einen Strom von Datensymbolen einzufügen.

2. Sender (71) nach Anspruch 1, wobei sich der vorbestimmte Pilotsymbolphasenbereich in einem oder zwei Quadranten eines Konstellationsdiagramms erstreckt, das ein digitales Modulationsschema darstellt, das für die Datensymbole verwendet wird.

3. Sender (71) nach Anspruch 1, wobei der vorbestimmte Pilotsymbolphasenbereich einem Bereich entspricht, der einen vorbestimmten maximalen Winkelversatz von einer vorbestimmten Achse durch ein Konstellationsdiagramm eines digitalen Modulationsschemas, das für die Datensymbole verwendet wird, aufweist.

4. Sender (71) nach Anspruch 3, wobei die vorbestimmte Achse eine Halbierungslinie eines Quadranten des Konstellationsdiagramms ist.

5. Sender (71) nach Anspruch 4, wobei der maximale Winkelversatz im Bereich von 0° bis ±45°, insbesondere im Bereich von 0° bis ±30°, liegt.

6. Sender (71) nach Anspruch 1, wobei der Sender (71) dazu betreibbar ist, die Datensymbole und/oder die nichtdeterministischen Pilotsymbole gemäß mindestens einem quaternären Quadraturamplitudenmodulations- (QAM) oder einem quaternären Phasenumtastungs- (PSK) Schemas zu modulieren.

7. Sender (71) nach Anspruch 1, ferner umfassend einen Vorwärtsfehlerkorrektur- (FEC) Kodierer (111), der dazu betreibbar ist, ein oder mehrere nicht vorbestimmte Bits ($u$) als redundante Bits basierend auf einem oder mehreren Informationsbits und einer FEC-Kodierungsregel zu erzeugen.

8. Sender (71) nach Anspruch 1, wobei die Datensymbole einem ersten Informationsdatenstrom entsprechen und wobei das eine oder die mehreren nichtdeterministischen Bits ($u$) des teilweise nichtdeterministischen, teilweise deterministischen Pilotsymbols einem zweiten Informationsdatenstrom mit einer niedrigeren Datenrate als der erste Informationsdatenstrom entsprechen.

9. Sender (71) nach Anspruch 8, wobei der zweite Informationsdatenstrom Steuerinformationen umfasst.

10. Verfahren zum Übertragen eines Signals mit Datensymbolen und Pilotsymbolen an einen Empfänger, wobei das Verfahren umfasst:

Abbilden eines oder mehrerer nichtdeterministischer Bits ($u$) und eines oder mehrerer deterministischer Bits ($p$) auf ein teilweise nichtdeterministisches, teilweise deterministisches Pilotsymbol (p'), wobei das eine oder die mehreren deterministischen Bits ($p$) dem Empfänger bekannt sind, wobei das eine oder die mehreren nichtdeterministischen Bits ($u$) dem Empfänger unbekannt sind, wobei das teilweise nichtdeterministische, teilweise deterministische Pilotsymbol (p') und die Datensymbole gemäß einem digitalen Modulationsschema moduliert werden, wobei das teilweise nichtdeterministische, teilweise deterministische Pilotsymbol (p') eine Pilotsymbolphase in einem vorbestimmten Pilotsymbolphasenbereich aufweist, der dem Empfänger bekannt ist und eine Teilmenge aller möglichen Symbolphasenwerte eines für die Datensymbole verwendeten digitalen Modulationsschemas abdeckt, wobei das teilweise nichtdeterministische, teilweise deterministische Pilotsymbol (p') unter Verwendung eines Pilotsymbolalphabets moduliert wird, das eine Teilmenge eines für die Datensymbole verwendeten Datensymbolalphabets ist; und
Einfügen des teilweise nichtdeterministischen, teilweise deterministischen Pilotsymbols in einen Strom von Datensymbolen.

11. Empfänger (73) zum Empfangen eines Stroms von Datensymbolen und Pilotsymbolen, wobei der Empfänger umfasst:
eine Phasenschätzeinrichtung (737), die dazu betreibbar ist, eine Phase eines Übertragungskanals basierend auf einem Vergleich eines empfangenen Symbols, das einer Pilotsymbolposition entspricht, mit einem hypothetischen, teilweise nichtdeterministischen, teilweise deterministischen Pilotsymbol zu schätzen, das hypothetische teilweise nichtdeterministische, teilweise deterministische Pilotsymbol, das einer Abbildung von einem oder mehreren hypothetischen nichtdeterministischen Bits ($u$), die dem Empfänger unbekannt sind, und einem oder mehreren deterministischen Bits, die dem Empfänger bekannt sind, entspricht, wobei das hypothetische teilweise nichtdeterministische, teilweise deterministische Pilotsymbol (p') und die Datensymbole gemäß einem digitalen Modulationsschema moduliert werden, wobei das hypothetische, teilweise nichtdeterministische, teilweise deterministische Pilotsymbol (p') eine Pilotsymbolphase in einem vorbestimmten Pilotsymbolphasenbereich aufweist, der dem Empfänger bekannt ist und eine Teilmenge aller möglichen Symbolphasenwerte des für die Datensymbole verwendeten digitalen Modulationsschemas abdeckt, wobei das teilweise nichtdeterministische, teilweise deterministische Pilotsymbol (p') unter Verwendung eines Pilotsymbolalphabets moduliert wird, das eine Teilmenge eines für die Datensymbole verwendeten Datensymbolalphabets ist.

12. Empfänger (73) nach Anspruch 11, wobei die Phasenschätzeinrichtung (737) ferner dazu betreibbar ist, eine zusätzliche blinde Phasenschätzung vor oder nach der Schätzung der Phase des Übertragungskanals durchzuführen.

13. Empfänger (73) nach Anspruch 11, wobei der Empfänger (73) ferner dazu betreibbar ist, ein oder mehrere nichtdeterministische Bits ($u$) basierend auf einem Ergebnis des Vergleichs zu erkennen.

14. Verfahren zum Empfangen eines Stroms von Datensymbolen und Pilotsymbolen durch einen Empfänger, wobei das Verfahren umfasst:

Schätzen einer Phase eines Übertragungskanals basierend auf einem Vergleich eines empfangenen Symbols, das einer Pilotsymbolposition entspricht, mit einem hypothetischen, teilweise nichtdeterministischen, teilweise deterministischen Pilotsymbol zu schätzen, das hypothetische teilweise nichtdeterministische teilweise deterministische Pilotsymbol, das einer Abbildung von einem oder mehreren hypothetischen nichtdeterministischen Bits ($u$), die dem Empfänger unbekannt sind, und einem oder mehreren deterministischen Bits, die dem Empfänger bekannt sind, entspricht, wobei das hypothetische teilweise nichtdeterministische, teilweise deterministische Pilotsymbol (p') und die Datensymbole gemäß einem digitalen Modulationsschema moduliert werden, wobei das hypothetische, teilweise nichtdeterministische, teilweise deterministische Pilotsymbol (p') eine Pilotsymbolphase in einem vorbestimmten Pilotsymbolphasenbereich aufweist, der dem Empfänger bekannt ist und eine Teilmenge aller möglichen Symbolphasenwerte eines für die Datensymbole verwendeten digitalen Modulationsschemas abdeckt, wobei das teilweise nichtdeterministische, teilweise deterministische Pilotsymbol (p') unter Verwendung eines Pilotsymbolalphabets moduliert wird, das eine Teilmenge eines für die Datensymbole verwendeten Datensymbolalphabets ist; und
Einfügen des teilweise nichtdeterministischen, teilweise deterministischen Pilotsymbols in einen Strom von Datensymbolen.

**Revendications**

1. Emetteur (71) destiné à transmettre à un récepteur un signal comprenant des symboles de données et des symboles pilotes, l'émetteur comprenant :

un dispositif de mappage (712) exploitable pour mapper un ou plusieurs bits non déterministes ($u$) et un ou plusieurs bits déterministes ($p$) vers un symbole pilote partiellement non déterministe partiellement déterministe (p'), dans lequel les un ou plusieurs bits déterministes ($p$) sont connus du récepteur, dans lequel les un ou plusieurs bits nos déterministes ($u$) sont inconnus du récepteur, dans lequel le symbole pilote partiellement déterministe partiellement déterministe (p') et les symboles de données sont modulés conformément à un plan de modulation numérique, dans lequel le symbole pilote partiellement non déterministe partiellement déterministe (p') a une phase de symbole pilote dans une plage de phases de symbole pilote prédéterminée qui est connue du récepteur et couvre un sous-ensemble de toutes les valeurs de phases de symbole possibles du plan de modulation numérique utilisé pour les symboles de données, dans lequel le symbole pilote partiellement déterministe partiellement déterministe (p') est modulé à l'aide d'un alphabet de symbole pilote qui est un sous-ensemble d'un alphabet de symbole pilote utilisé pour les symboles pilotes ; et
un dispositif d'insertion de symbole pilote (115) exploitable pour insérer le symbole pilote partiellement déterministe partiellement déterministe dans un flux de symboles de données.

2. Emetteur (71) selon la revendication 1, dans lequel la plage de phases de symbole pilote prédéterminée s'étend dans un ou deux quadrants d'un diagramme de constellation représentant un plan de modulation numérique utilisé pour les symboles de données.

3. Emetteur (71) selon la revendication 1, dans lequel la plage de phases de symbole pilote prédéterminée correspond à une plage ayant un décalage angulaire maximum prédéterminé par rapport à un axe prédéterminé à travers un diagramme de constellation d'un plan de modulation numérique utilisé pour les symboles de données.

4. Emetteur (71) selon la revendication 3, dans lequel l'axe prédéterminé est une ligne bissectrice d'un quadrant du diagramme de constellation.

5. Emetteur (71) selon la revendication 4, dans lequel le décalage angulaire maximum est compris dans la plage de 0° à ± 45°, en particulier dans la plage de 0° à ± 30°.

**6.** Emetteur (71) selon la revendication 1, l'émetteur (71) étant exploitable pour moduler les symboles de données et/ou les symboles pilotes non déterministes conformément à au moins un plan de modulation d'amplitude en quadrature quaternaire (QAM) ou un plan de modulation par déplacement de phase quaternaire (PSK).

**7.** Emetteur (71) selon la revendication 1, comprenant en outre un codeur à correction d'erreurs anticipée (FEC) (111) exploitable pour générer les un ou plusieurs bits non prédéterminés (u) en tant que bits redondants sur la base d'un ou plusieurs bits d'information et d'une règle de codage FEC.

**8.** Emetteur (71) selon la revendication 1, dans lequel les symboles de données correspondent à un premier flux de données d'information et dans lequel les un ou plusieurs bits non déterministes (u) du symbole pilote partiellement non déterministe partiellement déterministe correspondent à un second flux de données d'informations ayant un débit de données inférieur à celui du premier flux de données d'information.

**9.** Emetteur (71) selon la revendication 8, dans lequel le second flux de données d'information comprend des informations de commande.

**10.** Procédé de transmission à un récepteur d'un signal comprenant des symboles de données et des symboles pilotes, le procédé comprenant :

le mappage d'un ou plusieurs bits non déterministes (u) et d'un ou plusieurs bits déterministes (p) vers un symbole pilote partiellement non déterministe partiellement déterministe (p'), dans lequel les un ou plusieurs bits déterministes (p) sont connus du récepteur, dans lequel les un ou plusieurs bits nos déterministes (u) sont inconnus du récepteur, dans lequel le symbole pilote partiellement déterministe partiellement déterministe (p') et les symboles de données sont modulés conformément à un plan de modulation numérique, dans lequel le symbole pilote partiellement non déterministe partiellement déterministe (p') a une phase de symbole pilote dans une plage de phases de symbole pilote prédéterminée qui est connue du récepteur et couvre un sous-ensemble de toutes les valeurs de phases de symbole possibles du plan de modulation numérique utilisé pour les symboles de données, dans lequel le symbole pilote partiellement déterministe partiellement déterministe (p') est modulé à l'aide d'un alphabet de symbole pilote qui est un sous-ensemble d'un alphabet de symbole pilote utilisé pour les symboles pilotes ; et
l'insertion du symbole pilote partiellement déterministe partiellement déterministe dans un flux de symboles de données.

**11.** Récepteur (73) destiné à recevoir un flux de symboles de données et de symboles pilotes, le récepteur comprenant :
un estimateur de phase (737) exploitable pour estimer une phase d'un canal de transmission sur la base d'une comparaison d'un symbole reçu correspondant à une position de symbole pilote à un symbole partiellement non déterministe partiellement déterministe hypothétique, le symbole partiellement non déterministe partiellement déterministe hypothétique correspondant à un mappage d'un ou plusieurs bits non déterministes hypothétiques (u) inconnus du récepteur et d'un ou plusieurs bits déterministes connus du récepteur, dans lequel le symbole partiellement non déterministe partiellement déterministe hypothétique (p') et les symboles de données sont modulés conformément à un plan de modulation numérique, dans lequel le symbole partiellement non déterministe partiellement déterministe hypothétique (p') a une phase de symbole pilote dans une plage de phases de symbole pilote prédéterminée qui est connue du récepteur et couvre un sous-ensemble de toutes les valeurs de phases de symbole possibles du plan de modulation numérique utilisé pour les symboles de données, dans lequel le symbole pilote partiellement déterministe partiellement déterministe (p') est modulé à l'aide d'un alphabet de symbole pilote qui est un sous-ensemble d'un alphabet de symbole de données utilisé pour les symboles de données.

**12.** Récepteur (73) selon la revendication 11, dans lequel l'estimateur de phase (737) est exploitable en outre pour réaliser une estimation de phase aveugle supplémentaire avant ou après l'estimation de la phase du canal de transmission.

**13.** Récepteur (73) selon la revendication 11, le récepteur (73) étant exploitable en outre pour détecter les un ou plusieurs bits non déterministes (u) sur la base d'un résultat de la comparaison.

**14.** Procédé de réception par un récepteur d'un flux de symboles de données et de symboles pilotes, le récepteur comprenant :

l'estimation d'une phase d'un canal de transmission sur la base d'une comparaison d'un symbole reçu correspondant à une position de symbole pilote à un symbole partiellement non déterministe partiellement déterministe hypothétique, le symbole partiellement non déterministe partiellement déterministe hypothétique correspondant à un mappage d'un ou plusieurs bits non déterministes hypothétiques ($u$) inconnus du récepteur et d'un ou plusieurs bits déterministes connus du récepteur, dans lequel le symbole partiellement non déterministe partiellement déterministe hypothétique (p') et les symboles de données sont modulés conformément à un plan de modulation numérique, dans lequel le symbole partiellement non déterministe partiellement déterministe hypothétique (p') a une phase de symbole pilote dans une plage de phases de symbole pilote prédéterminée qui est connue du récepteur et couvre un sous-ensemble de toutes les valeurs de phases de symbole possibles du plan de modulation numérique utilisé pour les symboles de données, dans lequel le symbole pilote partiellement déterministe partiellement déterministe (p') est modulé à l'aide d'un alphabet de symbole pilote qui est un sous-ensemble d'un alphabet de symbole de données utilisé pour les symboles de données ; et l'insertion du symbole partiellement non déterministe partiellement déterministe hypothétique dans un flux de symboles de données.

Fig. 1

Fig. 2

Fig. 3

Fig. 4

Fig. 5

Fig. 6

Fig. 7

Fig. 8a

Fig. 8b

Fig. 8c

$(u_1,u_2)=(0,1)$
$(u_1,u_2)=(0,0)$ $\}$ pilot

$(u_1,u_2)=(1,1)$
$(u_1,u_2)=(1,0)$

$(u_3,u_4)=(0,1)$
$(u_3,u_4)=(0,0)$ $\}$ pilot

$(u_3,u_4)=(1,1)$
$(u_3,u_4)=(1,0)$

t=1    t=2    t=3    t=4    t=5    t=6

Fig. 8d

82

differential coding for $u_1$ if 180° phase ambiguities possible

rotationally invariant mapping for $u_2$ and $u_3$

$(u_1,u_2,u_3)=(0,0,0)$    $(u_1,u_2,u_3)=(0,0,1)$
$(u_1,u_2,u_3)=(0,1,0)$    $(u_1,u_2,u_3)=(0,1,1)$

pilot

$(u_1,u_2,u_3)=(1,1,1)$    $(u_1,u_2,u_3)=(1,1,0)$
$(u_1,u_2,u_3)=(1,0,1)$    $(u_1,u_2,u_3)=(1,0,0)$

t=1    t=2    t=3    t=4    t=5    t=6

Fig. 8e

Fig. 9a

Fig. 9b

Fig. 9c

Fig. 9d

Fig. 9e

t=1　　　t=2　　　t=3　　　t=4　　　t=5　　　t=6

Fig. 9f

t=1　　　t=2　　　t=3　　　t=4　　　t=5　　　t=6

Fig. 9g

t=1　　　t=2　　　t=3　　　t=4　　　t=5　　　t=6

Fig. 9h

t=1　　　t=2　　　t=3　　　t=4　　　t=5　　　t=6

Fig. 9i

t=1　　　t=2　　　t=3　　　t=4　　　t=5　　　t=6

Fig. 9j

Fig. 10

Fig. 11

Fig. 12

Fig. 13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007066973 A2
- WO 2010002166 A2
- WO 2006119583 A1
- EP 987831 A1

**Non-patent literature cited in the description**

- **A. J. VITERBI ; A. M. VITERBI.** Nonlinear Estimation of PSK-Modulated Carrier Phase with Application to Burst Digital Transmission. *IEEE Trans Inf. Theory,* July 1983, vol. IT-29 (4
- **T. PFAU ; S. HOFFMANN ; R. NOÉ.** Hardware-Efficient Coherent Digital Receiver Concept With Feedforward Carrier Recovery for M-QAM Constellations. *Journal Of Lightwave Technology,* 15 April 2009, vol. 27 (8
- Pilot-assisted decision-aided maximum-likelihood phase estimation in coherent optical phase-modulated systems with nonlinear phase noise. **ZHANG et al.** Photonics Technology Letters. IEEE, March 2010, vol. 22, 380-382
- **C. ZHU ; F. PITTALÀ ; M. FINKENBUSCH ; P.M. KRUMMRICH ; F. HAUSKE ; A. TRAN ; J. NOSSEK ; T. ANDERSON.** Overhead-Free Channel Estimation using Implicit Training for Polarization-Multiplexed Coherent Optical Systems. *Proc. OFC/NFOEC,* 2013